# FASCICULE DE BREVET EUROPEEN

(11) **EP 4 445 040 B1**
(45) Date de publication et mention de la délivrance du brevet: **25.03.2026**
(21) Numéro de dépôt: 22826112.9
(22) Date de dépôt: 01.12.2022
(51) Int. Cl.: F16F 15/14

(54) **DISPOSITIF D'AMORTISSEMENT PENDULAIRE**
PENDELDÄMPFUNGSVORRICHTUNG
PENDULUM DAMPING DEVICE

(30) Priorité: 10.12.2021 FR 2113323
(43) Date de publication de la demande: 16.10.2024
(73) Titulaire: VALEO EMBRAYAGES, 80009 Amiens (FR)
(72) Inventeur: DELIENCOURT, Nicolas, 95892 CERGY PONTOISE (FR); NERRIERE, Adrien, 95892 CERGY PONTOISE (FR)
(74) Mandataire: Valeo Powertrain Systems
(86) Numéro de dépôt international: PCT/EP2022/084134
(87) Numéro de publication internationale: WO 2023/104643

(56) Documents cités:
- WO-A1-2014/096614
- WO-A1-2017/010130
- FR-A1- 3 018 882
- FR-A1- 3 047 529
- US-A- 2 348 941
- US-A1- 2017 102 045

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

Ce double volant amortisseur est par exemple associé à un disque d'embrayage à friction ou intégré à un système de transmission comprenant un double embrayage à sec ou humide. Dans ce dernier cas, le système de transmission peut ou non être intégré à un véhicule à propulsion hybride.

Il est connu de prévoir un dispositif d'amortissement pendulaire comprenant :
- un support mobile en rotation autour d'un axe, et comprenant une patte coopérant avec des organes de rappel élastique,
- au moins un corps pendulaire, mobile par rapport au support et comprenant deux masses pendulaires respectivement disposées axialement d'un côté du support, ces deux masses pendulaires étant solidarisées entre elles par un organe de liaison, et
- deux organes de roulement guidant le déplacement du corps pendulaire par rapport au support, chaque organe de roulement coopérant avec une première piste de roulement solidaire du support et avec une deuxième piste de roulement solidaire du corps pendulaire et définie par l'organe de liaison.

Le ou les organes de liaison sont reçus dans une ou plusieurs fenêtres du support qui présente une dimension radiale importante puisqu'elle reçoit : un organe de roulement, l'organe de liaison définissant la deuxième piste de roulement sur laquelle roule cet organe de roulement, et puisqu'elle doit définir un espace accompagnant le déplacement du corps pendulaire. Du fait de cette dimension radiale importante, une hauteur de chute radiale significative existe dans cette fenêtre pour les masses pendulaires lorsqu'elles ne sont plus centrifugées. Il s'ensuit l'apparition de bruits lors des phases d'arrêt et de démarrage du véhicule.

Dans ces dispositifs connus, les deux masses pendulaires d'un même corps pendulaire sont exactement superposées de sorte que l'implantation d'organes de maintien de ce corps pendulaire pour éviter ces chutes radiales génère un encombrement additionnel ou nécessite des formes de corps pendulaires complexes lorsque plusieurs corps pendulaires se succèdent circonférentiellement autour du support.

Le document FR 3 018 882 A1 décrit un dispositif d'amortissement pendulaire selon le préambule de la revendication indépendante 1.

Il existe un besoin pour améliorer encore de tels dispositifs d'amortissement pendulaire.

L'invention a pour objet de répondre à ce besoin et elle y parvient, selon l'un de ses aspects, à l'aide d'un dispositif d'amortissement pendulaire, comprenant :
- un support mobile en rotation autour d'un axe,
- au moins un corps pendulaire, mobile par rapport au support et comprenant deux masses pendulaires respectivement disposées axialement d'un côté du support, ces deux masses pendulaires étant solidarisées entre elles par au moins un organe de liaison, et
- deux organes de roulement guidant le déplacement du corps pendulaire par rapport au support, chaque organe de roulement coopérant avec une première piste de roulement solidaire du support et avec une deuxième piste de roulement solidaire du corps pendulaire et définie par l'organe de liaison,
caractérisé par le fait que les deux masses pendulaires du corps pendulaire sont décalées l'une par rapport à l'autre circonférentiellement.

Comme on le verra par la suite, ce décalage circonférentiel l'une par rapport à l'autre des deux masses pendulaires du corps pendulaire facilite l'implantation d'organes de maintien permettant de remédier au problème de chute radiale mentionné précédemment.

Au sens de la présente demande :
- « axialement » signifie « parallèlement à l'axe de rotation »,
- « radialement » signifie « le long d'une droite appartenant à un plan orthogonal à l'axe de rotation et coupant cet axe de rotation»,
- « angulairement » ou « circonférentiellement » signifie « autour de l'axe de rotation »,
- « orthoradialement » signifie « perpendiculairement à une direction radiale »,
- « solidaire » signifie « rigidement couplé»,
- le secteur angulaire défini par une masse pendulaire depuis l'axe de rotation du support correspond, dans un plan perpendiculaire à cet axe de rotation, à l'angle maximal formé entre deux droites passant chacune par l'axe de rotation du support et coupant chacune en au moins une extrémité circonférentielle de cette masse pendulaire,
- l'ordre d'excitation d'un moteur thermique est égal au nombre d'explosions de ce moteur par tour de vilebrequin,
- la position de repos d'un corps pendulaire est celle dans laquelle ce corps pendulaire est centrifugé sans être soumis à des oscillations de torsion provenant des acyclismes du moteur thermique. Pour cette position de repos, la valeur de l'abscisse curviligne du centre de gravité du corps pendulaire est nulle, et
- une valeur d'ordre est filtrée par le dispositif d'amortissement pendulaire lorsque le rapport entre : l'amplitude d'une oscillation de torsion à cette valeur d'ordre en présence du dispositif d'amortissement pendulaire, et cette même amplitude en l'absence du dispositif d'amortissement pendulaire est inférieur à 0,2, notamment inférieur à 0,1.

Chaque masse pendulaire du corps pendulaire peut s'étendre entre deux extrémités circonférentielles sur un secteur angulaire mesuré depuis l'axe de rotation du support, le secteur angulaire ayant la même valeur pour ces deux masses pendulaires. Ainsi ces deux masses pendulaires peuvent être identiques structurellement parlant, mais être positionnées de façon circonférentiellement décalée à l'état assemblé, c'est-à-dire une fois rigidement fixées l'une à l'autre lorsque le corps pendulaire est formé. L'emploi pour réaliser un corps pendulaire de deux masses pendulaires identiques permet de réduire les coûts.

Lorsque les deux masses pendulaires d'un corps pendulaire s'étendent sur un même secteur angulaire mais sont décalées l'une par rapport à l'autre circonférentiellement, l'extrémité circonférentielle d'une des deux masses pendulaires du corps pendulaire peut s'étendre au-delà de l'extrémité circonférentielle correspondante de l'autre des deux masses pendulaires du corps pendulaire sur un secteur angulaire mesuré depuis l'axe de rotation qui est compris entre 20 et 45°. On désigne par « extrémités circonférentielles correspondantes » les extrémités des deux masses pendulaires du corps pendulaire dans le sens trigonométrique ou les extrémités des deux masses pendulaires du corps pendulaire dans le sens non-trigonométrique.

Chaque masse pendulaire présente ainsi une portion circonférentielle s'étendant circonférentiellement au-delà de l'autre masse pendulaire du corps pendulaire, jusqu'à l'extrémité circonférentielle de ladite masse pendulaire.

Dans tout ce qui précède, l'organe de liaison peut être unique et comprendre une unique entretoise définissant les deux deuxièmes pistes de roulement du corps pendulaire.

Un tel organe de liaison, ainsi que les deux organes de roulement coopérant avec ce dernier peuvent alors être reçus dans une même fenêtre ménagée dans le support. Chaque première piste de roulement est par exemple définie par un bord de cette fenêtre ménagée dans le support, et chaque deuxième piste de roulement est par exemple définie par un bord de cette entretoise de l'organe de liaison.

En variante, le corps pendulaire peut comprendre deux organes de liaison, chaque organe de liaison comprenant une entretoise. Chaque entretoise peut être reçue dans une fenêtre ménagée dans le support dans laquelle elle est la seule entretoise reçue. Dans ce cas, chaque organe de roulement coopère avec une deuxième piste de roulement définie par un bord d'une entretoise et avec une première piste de roulement définie par un bord de la fenêtre dans laquelle est reçue cette entretoise.

Indépendamment du nombre d'organes de liaison que comprend le corps pendulaire, chaque organe de liaison peut comprendre des moyens de fixation de l'entretoise à chaque masse pendulaire. L'organe de liaison comprend par exemple une pluralité de rivets assemblant l'entretoise aux deux masses pendulaires. En variante, l'entretoise est soudée aux deux masses pendulaires, vissée à ces deux masses pendulaires, ou encore emmanchée à force dans chacune de ces deux masses pendulaires.

Une portion du contour de l'entretoise définit par exemple chaque deuxième piste de roulement guidant le déplacement d'un corps pendulaire. En variante, un revêtement peut être déposé sur cette portion du contour de l'entretoise pour former une ou plusieurs deuxièmes pistes de roulement.

Dans tout ce qui précède, l'organe de roulement peut présenter une surface latérale de roulement qui roule alternativement sur une première piste de roulement et sur une deuxième piste de roulement. Cette surface latérale peut subir un traitement à l'aide de la meule, ce traitement étant encore appelé « usinage par abrasion ». En variante, ou en complément, cet organe de roulement présente au moins une surface axiale en regard d'une masse pendulaire et, cette surface axiale étant en tout ou partie traitée à l'aide d'une meule. Dans ce dernier cas, la surface de la masse pendulaire en regard de la surface axiale de l'organe de roulement en tout ou partie traitée à l'aide d'une meule peut être également en tout ou partie traitée à l'aide d'une meule. Il peut s'agir de la même meule pour ces deux surfaces axialement en regard.

Dans tout ce qui précède, chaque organe de roulement est par exemple un rouleau. Chaque organe de roulement est par exemple un rouleau réalisé en acier. Le rouleau peut être creux ou plein. Ce rouleau peut ne présenter qu'un unique diamètre, tout le long de son axe longitudinal.

Dans tout ce qui précède, le dispositif peut comprendre une pluralité d'organes de maintien portés par le support ou portés par le corps pendulaire, chaque portion circonférentielle d'une des masses pendulaires du corps pendulaire s'étendant circonférentiellement au-delà de l'autre masse pendulaire de ce corps pendulaire coopérant avec un de ces organes de maintien.

Ainsi, pour le corps pendulaire, deux organes de maintien sont prévus, chaque masse pendulaire coopérant avec un de ces deux organes de maintien par l'intermédiaire de sa portion circonférentielle qui s'étend circonférentiellement au-delà de l'autre masse pendulaire de ce corps pendulaire. La coopération avec ces organes de maintien permet de remédier au problème de chute radiale précité. Chaque organe de maintien peut, le cas échéant, également ou en variante, agir comme un synchroniseur, agissant circonférentiellement entre deux corps pendulaires voisins pour coordonner les mouvements de ces deux corps pendulaires circonférentiellement voisins.

Selon un premier mode de réalisation, chaque organe de maintien est porté par le support, chaque portion circonférentielle d'une des masses pendulaires du corps pendulaire s'étendant circonférentiellement au-delà de l'autre masse pendulaire de ce corps pendulaire comprenant une ouverture dans laquelle peut se déplacer l'organe de maintien. La forme de cette ouverture est choisie pour ne pas entraver le déplacement du corps pendulaire par rapport au support pour filtrer les oscillations de torsion. Le bord radialement extérieur de cette ouverture retient la masse pendulaire, et donc le corps pendulaire, lorsque ce corps pendulaire n'est plus centrifugé.

Selon un premier exemple de ce premier mode de réalisation, chaque organe de maintien est fixé sur le support. Il s'agit par exemple d'un pion fixé sur le support et s'étendant axialement, au moins du côté du support sur lequel se trouve la masse pendulaire coopérant avec ce pion.

Selon un deuxième exemple de ce premier mode de réalisation, chaque organe de maintien est monté mobile sur le support avec interposition d'un organe de rappel élastique exerçant un effort radial. Chaque organe de maintien est par exemple en contact avec un ressort poussant cet organe de maintien radialement vers l'extérieur. Cet organe de maintien est par exemple un pion et, lorsque le corps pendulaire n'est plus centrifugé, il appuie sur le bord radialement extérieur de l'ouverture de la masse pendulaire avec laquelle il coopère pour éviter que le corps pendulaire ne subisse une chute radiale.

Selon le premier mode de réalisation, chaque ouverture ménagée dans une masse pendulaire et coopérant avec un organe de maintien peut avoir son bord radialement extérieur et son bord radialement intérieur incurvés vers l'extérieur, radialement parlant. Le cas échéant, le bord radialement intérieur de ladite ouverture peut être ouvert, cette ouverture ne présentant alors pas un contour fermé.

Selon un deuxième mode de réalisation, chaque portion circonférentielle d'une des masses pendulaires du corps pendulaire s'étendant circonférentiellement au-delà de l'autre masse pendulaire de ce corps pendulaire peut porter de manière fixe un organe de maintien, ce dernier pouvant se déplacer dans une ouverture ménagée dans le support. Cette ouverture ménagée dans le support est avantageusement distincte d'une fenêtre ménagée dans le support, pour ne pas dégrader la tenue en centrifugation du support. Le bord radialement intérieur de cette ouverture ménagée dans le support retient l'organe de maintien, et donc la masse pendulaire et donc le corps pendulaire, lorsque ce corps pendulaire n'est plus centrifugé L'organe de maintien peut, également selon ce deuxième mode de réalisation, être un pion.

Selon ce deuxième mode de réalisation, chaque ouverture ménagée dans le support et coopérant avec un organe de maintien peut avoir son bord radialement extérieur et son bord radialement intérieur incurvés vers l'intérieur, radialement parlant.

Selon le premier ou le deuxième mode de réalisation, la coopération d'une masse pendulaire du corps pendulaire avec un organe de maintien et la coopération de l'autre masse pendulaire du corps pendulaire avec un autre organe de maintien peuvent se faire via des positions radiales différentes. Autrement dit, selon le premier mode de réalisation, l'ouverture ménagée dans l'une des masses pendulaires du corps pendulaire pour recevoir l'organe de maintien peut être ménagée à des emplacements radiaux en tout ou partie différents de ceux dans lesquels est ménagée dans l'autre masse pendulaire du corps pendulaire l'ouverture recevant l'autre organe de maintien. Selon le deuxième mode de réalisation, l'organe de maintien peut être fixé sur une des masses pendulaires du corps pendulaire à un emplacement radial différent de celui sur lequel est fixé l'autre organe de maintien sur l'autre masse pendulaire du corps pendulaire.

Dans tout ce qui précède, le dispositif d'amortissement pendulaire peut comprendre une pluralité de corps pendulaires, notamment trois corps pendulaires, se succédant circonférentiellement autour de l'axe de rotation du support, et chaque portion circonférentielle d'une masse d'un corps pendulaire s'étendant circonférentiellement au-delà de l'autre masse pendulaire de ce corps pendulaire peut présenter une zone chevauchant circonférentiellement une masse pendulaire d'un corps pendulaire circonférentiellement voisin.

Autrement dit, les différents corps pendulaires peuvent être disposés sur le support de manière à ce chaque masse pendulaire d'un corps pendulaire présente, circonférentiellement parlant :
- une portion chevauchant circonférentiellement une portion de l'autre masse pendulaire du corps pendulaire auquel elle appartient, cette autre masse pendulaire étant disposée de l'autre côté du support ;
- une portion circonférentielle s'étendant circonférentiellement au-delà de l'autre masse pendulaire du corps pendulaire auquel elle appartient, et au sein de laquelle une zone chevauche circonférentiellement une masse pendulaire disposée de l'autre côté du support et qui appartient au corps pendulaire circonférentiellement voisin.

Dans ce cas de chevauchement circonférentiel partiel entre deux masses appartenant respectivement à des corps pendulaires circonférentiellement voisins, chaque organe de maintien peut coopérer avec deux masses pendulaires appartenant respectivement à un de ces deux corps pendulaires circonférentiellement voisins. On mutualise ainsi les organes de maintien, ce qui permet d'en réduire le nombre, et donc le coût du dispositif d'amortissement pendulaire, puisqu'au lieu d'en avoir 2n pour n corps pendulaires, seuls n sont nécessaires.

En particulier, un organe de maintien selon le premier mode de réalisation ci-dessus peut s'étendre de chaque côté axialement du support, coopérant d'un côté du support avec l'ouverture ménagée dans une masse pendulaire d'un corps pendulaire et coopérant de l'autre côté du support avec l'ouverture ménagée dans une masse pendulaire du corps pendulaire circonférentiellement voisin.

En variante, bien qu'il y ait chevauchement circonférentiel partiel entre deux masses appartenant respectivement à des corps pendulaires circonférentiellement voisins, chaque organe de maintien peut ne coopérer qu'avec un seul corps pendulaire. Par exemple dans le deuxième mode de réalisation ci-dessus, deux ouvertures distinctes radialement décalées peuvent être ménagées dans chaque portion du support au niveau de laquelle il y a chevauchement circonférentiel partiel entre masses pendulaires appartenant à des corps pendulaires circonférentiellement voisins. Ces deux ouvertures radialement décalées peuvent se chevaucher circonférentiellement en tout ou partie. En variante, ces deux organes de maintien peuvent être reçus dans une même ouverture ménagée dans le support.

Quelle que soit la variante considérée, cette ouverture ou ces deux ouvertures peuvent être distinctes des fenêtres précitées et être disposées circonférentiellement entre deux fenêtres ménagées dans le support, l'une de ces deux fenêtres étant associée à un corps pendulaire et l'autre de ces deux fenêtres étant associée au corps pendulaire circonférentiellement voisin.

Dans tout ce qui précède, le support peut comprendre au moins une patte, notamment deux pattes diamétralement opposées, cette patte étant apte à coopérer avec des organes de rappel élastique de filtrage des oscillations de torsion.

La patte peut définir la portion du support radialement la plus éloignée de l'axe de rotation du support.

Dans tout ce qui précède, le support peut être réalisé d'une seule pièce, étant par exemple entièrement métallique.

Dans tout ce qui précède, dans le dispositif d'amortissement pendulaire, toutes les premières pistes de roulement solidaires du support peuvent avoir exactement la même forme entre elles et/ou toutes les deuxièmes pistes de roulement solidaires du corps pendulaires peuvent avoir exactement la même forme entre elles.

Dans tout ce qui précède, les première(s) et deuxième(s) pistes de roulement peuvent avoir des formes choisies pour que le corps pendulaire soit déplacé par rapport au support à la fois en translation autour d'un axe fictif parallèle à l'axe de rotation du support, et également en rotation sur lui-même, notamment en rotation autour de son centre de gravité.

L'invention a encore pour objet, selon un autre de ses aspects, un pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou un disque de friction, comprenant un dispositif d'amortissement pendulaire tel que défini ci-dessus.

Le composant est par exemple un double volant amortisseur, et il comprend :
- le dispositif d'amortissement pendulaire ci-dessus, avec la patte précitée, et
- une pluralité d'organes de rappel élastique, la patte interagissant avec deux organes de rappel élastique.

Deux pattes diamétralement opposées peuvent être prévues, comme mentionné ci-dessus.

Chaque organe de rappel élastique peut être formé par un unique ressort ou par plusieurs ressorts, par exemple par deux ressorts concentriques et de raideur différente. Chaque ressort peut être un ressort droit ou un ressort courbe.

Ce double volant amortisseur peut présenter :
- un volant primaire apte à être rigidement fixé, le cas échéant via une plaque flexible, au vilebrequin du moteur thermique, et
- un volant secondaire apte à être fixé en entrée d'un embrayage ou d'un double embrayage. Le support du dispositif d'amortissement pendulaire fait alors partie du volant secondaire.

Le volant primaire est apte à être solidarisé à un vilebrequin, ce qui signifie qu'il pourra être solidarisé de façon permanente au vilebrequin. Cette solidarisation du composant primaire au vilebrequin est alors différente de celle qui se produirait sélectivement via un embrayage, par exemple.

Le volant secondaire peut encore comprendre un moyeu. Ce moyeu peut comprendre des cannelures, afin d'être emboîté sur un arbre d'entrée de boîte de vitesses ou sur un arbre d'entrée d'un double embrayage, à sec ou humide.

L'invention a encore pour objet, selon un autre de ses aspects, un système de transmission, notamment pour véhicule hybride, comprenant :
- le composant ci-dessus, et
- un double embrayage, à sec ou humide, recevant le couple en sortie de ce composant.

Le système de transmission peut encore comprendre :
- une boîte de vitesses, comprenant des pignons, définissant des rapports de boîte, et
- un essieu avant et un essieu arrière.

L'invention a encore pour objet, selon un autre de ses aspects un groupe motopropulseur de véhicule hybride, comprenant :
- le système de transmission ci-dessus, et
- une machine électrique tournante de propulsion, l'arbre de la machine électrique tournante étant solidaire en rotation :
   - d'un arbre d'entrée de la boîte de vitesses, ou
   - de l'arbre de sortie de la boîte de vitesses, ou
   - de pignons fous de la boîte de vitesses, ou
   - de l'essieu avant ou de l'essieu arrière, ou
   - du vilebrequin du moteur thermique du véhicule,
La machine électrique tournante a par exemple une tension nominale d'alimentation de 48V, ou une tension nominale d'alimentation supérieure à 200V, notamment à 300V.

L'invention pourra être mieux comprise à la lecture de la description qui va suivre d'exemples non limitatifs et à l'examen du dessin annexé sur lequel :
[Fig 1] représente un dispositif d'amortissement pendulaire pour double volant amortisseur avec un dispositif d'amortissement pendulaire selon l'invention, ,
[Fig 2] représente une partie d'un dispositif d'amortissement pendulaire selon un premier exemple d'un premier mode de réalisation,
[Fig 3] est un détail de la figure 2,
[Fig 4] représente similairement à la figure 2 un deuxième exemple du premier mode de réalisation,
[Fig 5] représente une partie d'un dispositif d'amortissement pendulaire selon un premier exemple d'un deuxième mode de réalisation, et
[Fig 6] représente un détail d'un deuxième exemple du deuxième mode de réalisation.

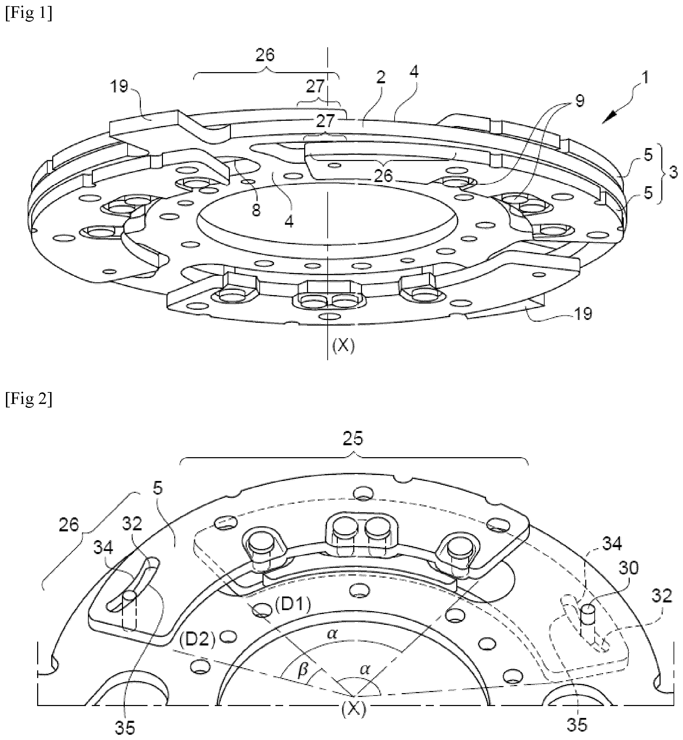

On a représenté sur la figure 1 un dispositif d'amortissement pendulaire 1 pour un double volant amortisseur. Ce double volant amortisseur est par exemple destiné à être associé à un double embrayage humide et/ou à être intégré à un groupe motopropulseur hybride de véhicule.

Le double volant amortisseur comprend de façon connue un volant primaire, et un volant secondaire.

Le volant primaire peut comprendre : un moyeu, une flexplate, et une couronne de démarreur. Ce volant primaire est apte à être fixé au vilebrequin d'un moteur thermique via des vis ou des rivets. Le moteur thermique est par exemple à trois ou quatre cylindres.

Le volant secondaire peut comprendre : un moyeu présentant des cannelures permettant son montage sur un arbre, un flasque 2, encore appelé « voile », et fixé via des rivets reçus dans des trous ménagés dans le voile sur le moyeu, et des corps pendulaires 3, chaque corps pendulaire comprenant deux masses pendulaires 5 respectivement disposée axialement d'un côté 4 du voile 2, ce dernier jouant le rôle de support pour les corps pendulaires.

Le double volant amortisseur comprend encore des organes de rappel élastique limitant la rotation du volant secondaire par rapport au volant primaire autour de l'axe de rotation X. Deux ressorts sont ici prévus et il peut s'agir de ressorts courbes.

Comme on peut le voir sur la figure 1, le support 2 comprend dans cet exemple deux pattes 19 définissant chacun une extension radiale et chacune de ces pattes 19 vient en contact avec un ressort lorsque le volant secondaire se déplace en rotation autour de l'axe X par rapport au volant primaire. Les deux pattes 19 sont ici diamétralement opposées.

Sur la figure 1, le dispositif d'amortissement pendulaire 1 est au repos, c'est-à-dire qu'il ne filtre pas les oscillations de torsion du fait des acyclismes du moteur thermique.

Dans l'exemple de la figure 1, trois corps pendulaires 3 sont prévus, étant répartis de façon uniforme sur le pourtour de l'axe X.

Comme on peut le voir sur la figure 1, chaque corps pendulaire 3 comprend dans cet exemple:
- deux masses pendulaires 5, chaque masse pendulaire 5 s'étendant axialement respectivement d'un côté 4 du support 2, et
- un unique organe de liaison 6 solidarisant les deux masses pendulaires 5 de ce corps pendulaire.

Dans d'autres exemples, deux organes de liaison 6 distincts peuvent être prévus pour solidariser les deux masses pendulaires 5 d'un même corps pendulaire 3.

Chaque masse pendulaire 5 d'un corps pendulaire 3 s'étend dans l'exemple décrit entre deux extrémités circonférentielles sur un secteur angulaire α mesuré depuis l'axe de rotation X du support 2 qui est égal, d'une de ces masses pendulaires 5 à l'autre.

Dans l'exemple de la figure 1, chaque organe de liaison 6 comprend une unique entretoise 7 rigidement fixée entre chaque masse pendulaire 5 d'un corps pendulaire par l'intermédiaire de rivets 9 visibles sur la figure 1 qui sont reçus dans des trous ménagés dans l'entretoise 7, de manière à solidariser entre elles ces deux masses pendulaires 5.

Chaque entretoise 7 s'étend en partie dans une fenêtre 8 ménagée dans le support 2. Dans l'exemple considéré, la fenêtre 8 définit un espace vide à l'intérieur du support 2, cette fenêtre étant délimitée par un contour fermé.

Le dispositif 1 comprend encore dans l'exemple considéré des organes de roulement 11 guidant le déplacement des corps pendulaires 3 par rapport au support 2. Les organes de roulement 11 sont ici des rouleaux, comme on le verra par la suite. Dans l'exemple des figures, chaque rouleau conserve un diamètre sensiblement constant sur toute sa longueur.

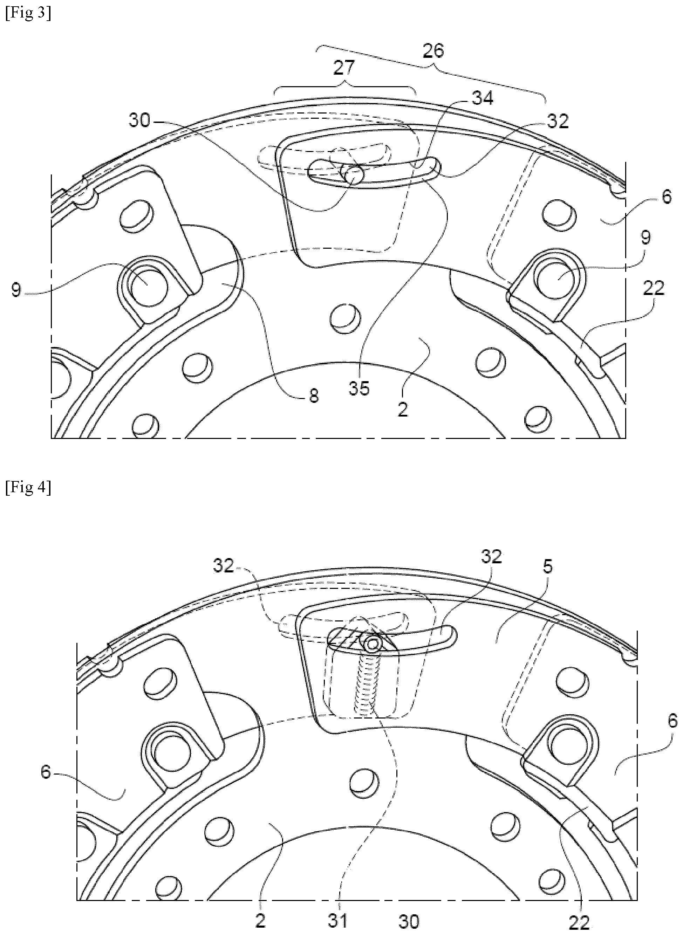

Comme on le voit sur la figure 3, le dispositif 1 peut également comprendre des organes d'amortissement de butée 22 aptes à venir simultanément en contact avec une entretoise 7 et avec le support 2 dans certaines positions relatives du support 2 et des masses pendulaires 5, telles que les venues en butée à l'issue d'un déplacement maximal depuis la position de repos pour filtrer une oscillation de torsion ou lors d'une chute radiale du corps pendulaire. Chaque organe d'amortissement de butée 22 est par exemple solidaire d'un corps pendulaire, étant monté sur ce corps pendulaire et disposé de manière à s'interposer radialement entre l'entretoise 7 de ce corps pendulaire 3 et le contour de la fenêtre 8. Chaque organe d'amortissement de butée 22 comprend par exemple une ou plusieurs parties fixées sur l'entretoise 7.

Dans l'exemple décrit, le mouvement par rapport au support 2 de chaque corps pendulaire est guidé par deux organes de roulement 11.

Comme on peut le voir sur la figure 4, chaque organe de roulement 11 coopère par roulement avec une seule première piste de roulement 12 solidaire du support 2, et avec une seule deuxième piste de roulement 13 solidaire du corps pendulaire 3 pour guider le déplacement du corps pendulaire en translation autour d'un axe fictif parallèle à l'axe de rotation X du support 2 et, le cas échéant, en rotation, notamment en rotation autour du centre de gravité dudit corps pendulaire 3.

Dans l'exemple considéré, chaque deuxième piste de roulement 13 est formée par une portion du bord radialement extérieur de l'entretoise 7 qui définit ainsi, via deux portions différentes de son bord radialement extérieur, les deuxièmes pistes de roulement 13 du corps pendulaire.

Chaque première piste de roulement 12 est dans l'exemple considéré définie par une partie du contour de la fenêtre 8 dans laquelle est reçue l'entretoise 7. Dans l'exemple considéré, deux portions différentes du bord radialement extérieur du contour définissent ainsi les deux premières pistes de roulement 12 associées au corps pendulaire.

Chaque première piste de roulement 12 est ici disposée radialement en regard d'une deuxième piste de roulement 13, de sorte qu'une même surface latérale de roulement d'un organe de roulement 11 roule alternativement sur la première piste de roulement 12 et sur la deuxième piste de roulement 13. La surface latérale de roulement de l'organe de roulement est ici un cylindre de rayon constant.

Dans les exemples des figures, des pièces d'interposition axiales entre le corps pendulaire 3 et le support 2, encore appelées « patin » sont prévues. Un ou plusieurs patins sont par exemple portés de manière fixe par chaque masse pendulaire 5, sur leur face en regard du support 2. La fixation de ces patins se faire par exemple via des saillies 17 reçues dans des ouvertures ménagées dans les masses pendulaires 5.

Selon les modes de réalisation qui vont maintenant être décrits, on constate que pour chaque corps pendulaire 3, les deux masses pendulaires 5 sont décalées l'une par rapport à l'autre circonférentiellement.

Ainsi, chaque masse pendulaire 5 d'un corps pendulaire 3 présente, dans les modes décrits :
- une portion 25 chevauchant circonférentiellement une portion 25 de l'autre masse pendulaire 5 du corps pendulaire 3 auquel elle appartient, cette autre masse pendulaire étant disposée de l'autre côté 4 du support 2,
- une portion circonférentielle 26 s'étendant circonférentiellement au-delà de l'autre masse pendulaire 5 du corps pendulaire auquel elle appartient, et au sein de laquelle une zone 27 chevauche circonférentiellement une masse pendulaire 5 disposée de l'autre côté du support et qui appartient au corps pendulaire 3 circonférentiellement voisin.

Le décalage circonférentiel entre deux masses pendulaires 5 appartenant à un même corps pendulaire 3 une fois formé, mesuré comme étant la valeur du secteur angulaire défini depuis l'axe de rotation X du support entre :
- la droite D1 passant par l'axe de rotation X et par l'extrémité radialement extérieure d'un bord circonférentiel d'une de ces masses pendulaires 5, et
- la droite D2 passant par l'axe de rotation X et par l'extrémité radialement extérieure du bord circonférentiel correspondant de l'autre de ces masses pendulaires 5,
est ici compris entre 5 et 45°, par exemple entre 20° et 45°.

On va maintenant décrire en référence aux figures 2 à 6 des modes de réalisation de l'invention dans lesquels des organes de maintien 30 permettant de remédier au problème de chute radiale des corps pendulaires 3 sont présents.

Chaque corps pendulaire 3 présente à proximité d'une de ses extrémités circonférentielles un organe de maintien 30. L'un de ces organes de maintien coopère ici avec la portion circonférentielle 26 d'une masse pendulaire 5 et l'autre de ces organes de maintien coopère avec la portion circonférentielle 26 de l'autre masse pendulaire 5 de ce même corps pendulaire 3.

Selon le premier mode de réalisation, décrit en référence aux figures 2 à 4, chaque organe de maintien 30 est porté par le support 2. On constate par ailleurs que, selon ce premier mode, tel qu'il est décrit spécifiquement en référence aux figures 2 à 4, chaque organe de maintien 30 est commun à deux corps pendulaires circonférentiellement voisins.

Les figures 2 et 3 correspondent à un premier exemple de ce premier mode de réalisation dans lequel chaque organe de maintien 30 est fixé sur le support 2. Chaque organe de maintien 30 est par exemple un pion s'étendant axialement de chaque côté du support 2. Ce pion 30 a une partie axiale reçue dans une ouverture 32 ménagée dans la portion circonférentielle 26 d'une masse pendulaire 5 situé d'un côté 4 du support et appartenant à un corps pendulaire 2, et une autre partie axiale reçue dans une ouverture 32 ménagée dans la portion circonférentielle 26 d'une masse pendulaire 5 située de l'autre côté 4 du support 2 et appartenant à un autre corps pendulaire circonférentiellement voisin.

Chacune de ces ouvertures 32 a ici une forme choisie pour ne pas entraver le déplacement du corps pendulaire 3 correspondant par rapport au support 2 pour filtrer les oscillations de torsion. Le bord radialement extérieur 34 de chacune de ces ouvertures 32 retient la masse pendulaire correspondante, et donc le corps pendulaire correspondant, lorsque ce corps pendulaire n'est plus centrifugé.

Comme on peut le voir sur les figures 2 et 3, chacune de ces ouvertures 32 peut avoir son bord radialement extérieur 34 et son bord radialement intérieur 35 incurvés vers l'extérieur, radialement parlant.

La figure 4 représente un deuxième exemple de ce premier mode de réalisation. Cet exemple ne diffère du précédent que par le fait que, bien que chaque organe de maintien 30 soit toujours porté par le support 2, le montage de cet organe de maintien 30 sur le support 2 n'est plus fixe, mais il se fait via interposition d'un organe de rappel élastique 31 exerçant une force tendant à déplacer radialement vers l'extérieur l'organe de maintien 30, qui est ici toujours un pion. Cet organe de rappel élastique est ici un ressort 31 et, lorsque les deux corps pendulaires circonférentiellement voisins coopérant avec l'organe de maintien 30 ne sont plus centrifugés, il contraint chaque partie axiale du pion 30, de manière à ce que chacune de ces parties axiales du pion 30 appuie sur le bord radialement extérieur 34 de l'ouverture 32 de la masse pendulaire 5 correspondante.

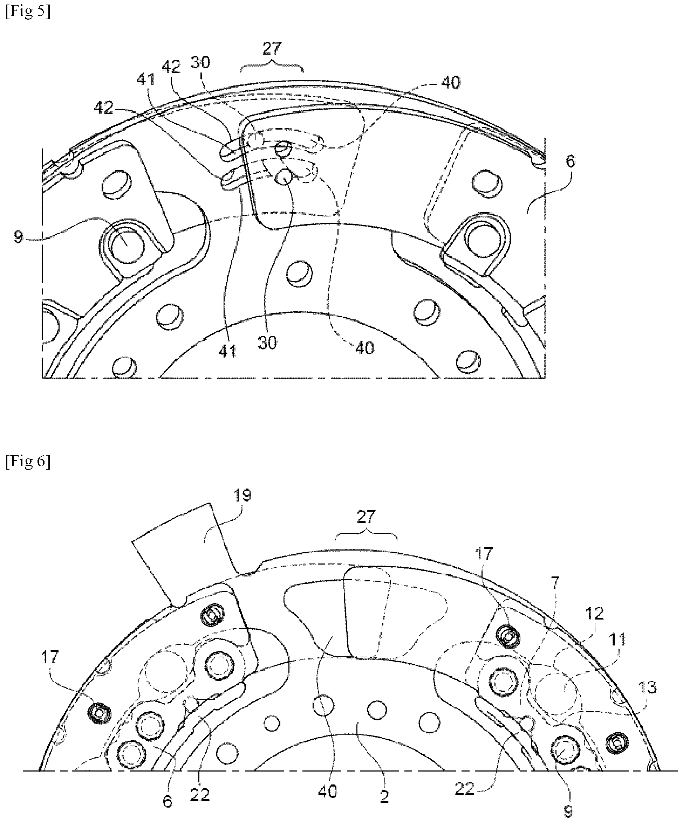

Selon un deuxième mode de réalisation, décrit en référence aux figures 5 et 6, chaque organe de maintien 30 est porté par un corps pendulaire 3. On constate par ailleurs que, selon ce deuxième mode, tel qu'il est décrit spécifiquement en référence aux figures 5 et 6, chaque organe de maintien 30 est propre à un corps pendulaire 3, n'étant ainsi pas commun à deux corps pendulaires circonférentiellement voisins.

On constate sur la figure 5 que chaque portion circonférentielle 26 d'une masse pendulaire 5 s'étendant circonférentiellement au-delà de l'autre masse pendulaire 5 du corps pendulaire 3 auquel elle appartient porte de manière fixe un organe de maintien 30. Cet organe de maintien 30 est ici un pion, et il peut se déplacer dans une ouverture 40 ménagée dans le support qui est distincte d'une fenêtre 8 ménagée dans le support 2.

Dans l'exemple de la figure 5, cette ouverture 40 est dédiée à un unique pion 30. Le bord radialement intérieur 41 de cette ouverture 40 retient le pion 30, et donc la masse pendulaire et donc le corps pendulaire, lorsque ce corps pendulaire 3 n'est plus centrifugé.

On constate également sur la figure 5 que chaque ouverture 40 peut avoir son bord radialement extérieur 42 et son bord radialement intérieur 41 incurvés vers l'intérieur, radialement parlant.

Comme on peut le voir sur la figure 5, une même portion du support 2 peut comprendre deux ouvertures 40, chacune étant respectivement dédiée à un organe de maintien 30 d'un corps pendulaire 3. Ces deux ouvertures 40 sont radialement décalées et peuvent se chevaucher circonférentiellement en tout ou partie.

Dans le deuxième exemple de ce deuxième mode de réalisation, qui va maintenant être décrit en référence à la figure 6, l'ouverture 40 recevant un organe de maintien 30 porté par la portion 26 circonférentielle d'une masse pendulaire 5 d'un corps pendulaire 3 reçoit également l'organe de maintien 30 porté par la portion 26 circonférentielle d'une masse pendulaire 5 d'un corps pendulaire circonférentiellement voisin. Cette ouverture 40 est alors disposé circonférentiellement entre :
- une fenêtre 8 ménagée dans le support et recevant les organes de roulement 11 d'un de ces deux corps pendulaires 3 et
- une fenêtre 8 ménagée dans le support 2 et recevant les organes de roulement 11 de l'autre de ces deux corps pendulaires.

Selon ce deuxième exemple de ce deuxième mode de réalisation, les organes de maintien 30 agissent comme des synchroniseurs.

Selon l'un ou l'autre du premier et du deuxième mode de réalisation, pour chaque corps pendulaire 3, la coopération d'une masse pendulaire 5 du corps pendulaire 3 avec un organe de maintien 30 et la coopération de l'autre masse pendulaire 5 du corps pendulaire 3 avec un autre organe de maintien 30 peuvent se faire via des positions radiales différentes. Autrement dit, selon le premier mode de réalisation, l'ouverture 32 ménagée dans l'une des masses pendulaires 5 du corps pendulaire 3 pour recevoir l'organe de maintien 30 est par exemple ménagée à des emplacements radiaux en tout ou partie différents de ceux dans lesquels est ménagée dans l'autre masse pendulaire 5 de ce corps pendulaire 3 l'ouverture 32 recevant l'autre organe de maintien 30. Selon le deuxième mode de réalisation, l'organe de maintien 30 est par exemple fixé sur une des masses pendulaires 5 du corps pendulaire 3 à un emplacement radial différent de celui sur lequel est fixé l'autre organe de maintien 30 sur l'autre masse pendulaire 5 du corps pendulaire 3.

L'invention n'est pas limitée aux modes de réalisation qui viennent d'être décrits. L'étendue de la protection est définie par les revendications annexées.

## Revendications

1. Dispositif d'amortissement pendulaire (1), comprenant :
- un support (2) mobile en rotation autour d'un axe (X),
- au moins un corps pendulaire (3), mobile par rapport au support (2) et comprenant deux masses pendulaires (5) respectivement disposées axialement d'un côté (4) du support (2), ces deux masses pendulaires (5) étant solidarisées entre elles par au moins un organe de liaison (6), et
- deux organes de roulement (11) guidant le déplacement du corps pendulaire par rapport au support (2), chaque organe de roulement (11) coopérant avec une première piste de roulement (12) solidaire du support (2) et avec une deuxième piste de roulement (13) solidaire du corps pendulaire et définie par l'organe de liaison,
**caractérisé par le fait que** les deux masses pendulaires (5) du corps pendulaire (3) sont décalées l'une par rapport à l'autre circonférentiellement.

2. Dispositif selon la revendication 1, chaque masse pendulaire (5) du corps pendulaire (3) s'étendant entre deux extrémités circonférentielles sur un secteur angulaire (α) mesuré depuis l'axe de rotation (X) du support (13), le secteur angulaire ayant la même valeur pour ces deux masses pendulaires.

3. Dispositif selon la revendication 2, l'extrémité circonférentielle d'une des deux masses pendulaires (5) du corps pendulaire s'étendant au-delà de l'extrémité circonférentielle correspondante de l'autre des deux masses pendulaires du corps pendulaire sur un secteur angulaire (β) mesuré depuis l'axe de rotation (X) qui est compris entre 20° et 45°.

4. Dispositif selon l'une quelconque des revendications 1 à 3, l'organe de liaison (6) étant unique et comprenant une unique entretoise (7) définissant les deux deuxièmes pistes de roulement (13) du corps pendulaire (3).

5. Dispositif selon l'une quelconque des revendications précédentes, comprenant une pluralité d'organes de maintien (30) portés par le support (2) ou portés par le corps pendulaire (3), chaque portion circonférentielle (26) d'une des masses pendulaires (5) du corps pendulaire (3) s'étendant circonférentiellement au-delà de l'autre masse pendulaire (5) de ce corps pendulaire (3) coopérant avec un de ces organes de maintien (30).

6. Dispositif selon la revendication 5, chaque organe de maintien (30) étant porté par le support (2), chaque portion circonférentielle (26) d'une des masses pendulaires (5) du corps pendulaire (3) s'étendant circonférentiellement au-delà de l'autre masse pendulaire (5) de ce corps pendulaire (3) comprenant une ouverture (32) dans laquelle peut se déplacer l'organe de maintien (30).

7. Dispositif selon la revendication 6, chaque organe de maintien (30) étant fixé sur le support.

8. Dispositif selon la revendication 6, chaque organe de maintien (30) étant monté mobile sur le support (2) avec interposition d'un organe de rappel élastique (31) exerçant un effort radial.

9. Dispositif selon la revendication 5, chaque portion circonférentielle (26) d'une des masses pendulaires (5) du corps pendulaire (3) s'étendant circonférentiellement au-delà de l'autre masse pendulaire (5) de ce corps pendulaire (3) portant de manière fixe un organe de maintien (30), ce dernier pouvant se déplacer dans une ouverture (40) ménagée dans le support (2).

10. Dispositif selon l'une quelconque des revendications 5 à 9, comprenant une pluralité de corps pendulaires (3), notamment trois corps pendulaires, se succédant circonférentiellement autour de l'axe (X) de rotation du support (2), chaque portion circonférentielle (26) d'une masse (5) d'un corps pendulaire (3) s'étendant circonférentiellement au-delà de l'autre masse pendulaire (5) de ce corps pendulaire (3) présentant une zone (27) chevauchant circonférentiellement une masse pendulaire (5) d'un corps pendulaire (3) circonférentiellement voisin.

11. Dispositif selon la revendication 10, chaque organe de maintien (30) coopérant avec deux masses pendulaires (5) appartenant respectivement à des corps pendulaires circonférentiellement voisins, ou chaque organe de maintien (30) ne coopérant qu'avec un seul corps pendulaire (3).

12. Dispositif selon l'une quelconque des revendications précédentes, le support (2) comprenant au moins une patte (19), notamment deux pattes (19) diamétralement opposées, cette patte (19) étant apte à coopérer avec des organes de rappel élastique de filtrage des oscillations de torsion.

13. Composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou un disque de friction, comprenant un dispositif d'amortissement pendulaire (1) selon l'une quelconque des revendications précédentes

14. Composant selon la revendication 13, étant un double volant amortisseur, et comprenant :
- le dispositif d'amortissement pendulaire (1) selon la revendication 12, et
- une pluralité d'organes de rappel élastique, la patte (19) interagissant avec deux organes de rappel élastique.

## Patentansprüche

1. Pendeldämpfungsvorrichtung (1), umfassend:
- einen Träger (2), der um eine Achse (X) drehbar ist,
mindestens einen Pendelkörper (3), der in Bezug auf den Träger (2) beweglich ist und zwei Pendelmassen (5) umfasst, die jeweils axial auf einer Seite (4) des Trägers (2) angeordnet sind, wobei diese zwei Pendelmassen (5) durch mindestens ein Verbindungselement (6) miteinander verbunden sind, und
- zwei Wälzelemente (11), die die Bewegung des Pendelkörpers in Bezug auf den Träger (2) führen, wobei jedes Wälzelement (11) mit einer ersten Wälzbahn (12), die mit dem Träger (2) fest verbunden ist, und mit einer zweiten Wälzbahn (13), die mit dem Pendelkörper fest verbunden ist und durch das Verbindungselement definiert wird, zusammenwirkt,
**dadurch gekennzeichnet, dass** die beiden Pendelmassen (5) des Pendelkörpers (3) umfangsmäßig zueinander versetzt sind.

2. Vorrichtung nach Anspruch 1, wobei sich jede Pendelmasse (5) des Pendelkörpers (3) zwischen zwei Umfangsenden über einen Winkelsektor (a) erstreckt, der von der Drehachse (X) des Trägers (13) aus gemessen wird, wobei der Winkelsektor für diese beiden Pendelmassen den gleichen Wert hat.

3. Vorrichtung nach Anspruch 2, wobei sich das Umfangsende einer der beiden Pendelmassen (5) des Pendelkörpers über das entsprechende Umfangsende der anderen der beiden Pendelmassen des Pendelkörpers hinaus über einen Winkelsektor (β) erstreckt, der von der Drehachse (X) aus gemessen wird und zwischen 20° und 45° liegt.

4. Vorrichtung nach einem der Ansprüche 1 bis 3, wobei das Verbindungselement (6) einzigartig ist und einen einzigen Abstandshalter (7) umfasst, der die beiden zweiten Wälzbahnen (13) des Pendelkörpers (3) definiert.

5. Vorrichtung nach einem der vorhergehenden Ansprüche, umfassend eine Vielzahl von Halteelementen (30), die vom Träger (2) getragen werden oder vom Pendelkörper (3) getragen werden, wobei jeder Umfangsabschnitt (26) einer der Pendelmassen (5) des Pendelkörpers (3), der sich umfangsmäßig über die andere Pendelmasse (5) dieses Pendelkörpers (3) hinaus erstreckt, mit einem dieser Halteelemente (30) zusammenwirkt.

6. Vorrichtung nach Anspruch 5, wobei jedes Halteelement (30) vom Träger (2) getragen wird, wobei jeder Umfangsabschnitt (26) einer der Pendelmassen (5) des Pendelkörpers (3), der sich umfangsmäßig über die andere Pendelmasse (5) dieses Pendelkörpers (3) hinaus erstreckt, eine Öffnung (32) umfasst, in der sich das Halteelement (30) bewegen kann. ANSPRÜCHE

7. Vorrichtung nach Anspruch 6, wobei jedes Halteelement (30) am Träger befestigt ist.

8. Vorrichtung nach Anspruch 6, wobei jedes Halteelement (30) beweglich am Träger (2) montiert ist, mit Zwischenschaltung eines elastischen Rückstellelements (31), das eine radiale Kraft ausübt.

9. Vorrichtung nach Anspruch 5, wobei jeder Umfangsabschnitt (26) einer der Pendelmassen (5) des Pendelkörpers (3), der sich umfangsmäßig über die andere Pendelmasse (5) dieses Pendelkörpers (3) hinaus erstreckt, fest ein Halteelement (30) trägt, wobei letzteres sich in einer im Träger (2) ausgebildeten Öffnung (40) bewegen kann.

10. Vorrichtung nach einem der Ansprüche 5 bis 9, umfassend eine Vielzahl von Pendelkörpern (3), insbesondere drei Pendelkörper, die umfangsmäßig um die Drehachse (X) des Trägers (2) aufeinanderfolgen, wobei jeder Umfangsabschnitt (26) einer Masse (5) eines Pendelkörpers (3), der sich umfangsmäßig über die andere Pendelmasse (5) dieses Pendelkörpers (3) hinaus erstreckt, einen Bereich (27) aufweist, der umfangsmäßig eine Pendelmasse (5) eines umfangsmäßig benachbarten Pendelkörpers (3) überlappt.

11. Vorrichtung nach Anspruch 10, wobei jedes Halteelement (30) mit zwei Pendelmassen (5) zusammenwirkt, die jeweils zu umfangsmäßig benachbarten Pendelkörpern gehören, oder jedes Halteelement (30) nur mit einem einzigen Pendelkörper (3) zusammenwirkt.

12. Vorrichtung nach einem der vorhergehenden Ansprüche, wobei der Träger (2) mindestens eine Lasche (19), insbesondere zwei diametral gegenüberliegende Laschen (19) umfasst, wobei diese Lasche (19) geeignet ist, mit elastischen Rückstellelementen zur Filterung von Torsionsschwingungen zusammenzuwirken.

13. Komponente für ein Getriebessystem eines Kraftfahrzeugs, wobei die Komponente insbesondere ein Zweimassenschwungrad, ein hydrodynamischer Drehmomentwandler, ein mit der Kurbelwelle verbundenes Schwungrad, eine trockene oder nasse Doppelkupplung, eine einfache nasse Kupplung, eine Komponente eines Hybridantriebsstrangs oder eine Reibscheibe ist, umfassend eine Pendeldämpfungsvorrichtung (1) nach einem der vorhergehenden Ansprüche.

14. Komponente nach Anspruch 13, die ein Zweimassenschwungrad ist und umfasst:
- die Pendeldämpfungsvorrichtung (1) nach Anspruch 12, und
- eine Vielzahl von elastischen Rückstellelementen, wobei die Lasche (19) mit zwei elastischen Rückstellelementen zusammenwirkt.

## Claims

1. Pendular damping device (1), comprising:
- a support (2) rotatable around an axis (X),
at least one pendular body (3), movable relative to the support (2) and comprising two pendular masses (5) respectively arranged axially on one side (4) of the support (2), these two pendular masses (5) being joined together by at least one connecting member (6), and
- two rolling elements (11) guiding the movement of the pendular body relative to the support (2), each rolling element (11) cooperating with a first rolling track (12) integral with the support (2) and with a second rolling track (13) integral with the pendular body and defined by the connecting member,
**characterized in that** the two pendular masses (5) of the pendular body (3) are offset from one another circumferentially.

2. Device according to claim 1, each pendular mass (5) of the pendular body (3) extending between two circumferential ends over an angular sector (a) measured from the rotation axis (X) of the support (13), the angular sector having the same value for these two pendular masses.

3. Device according to claim 2, the circumferential end of one of the two pendular masses (5) of the pendular body extending beyond the corresponding circumferential end of the other of the two pendular masses of the pendular body over an angular sector (β) measured from the rotation axis (X) which is between 20° and 45°.

4. Device according to any one of claims 1 to 3, the connecting member (6) being unique and comprising a single spacer (7) defining the two second rolling tracks (13) of the pendular body (3).

5. Device according to any one of the preceding claims, comprising a plurality of retaining members (30) carried by the support (2) or carried by the pendular body (3), each circumferential portion (26) of one of the pendular masses (5) of the pendular body (3) extending circumferentially beyond the other pendular mass (5) of this pendular body (3) cooperating with one of these retaining members (30).

6. Device according to claim 5, each retaining member (30) being carried by the support (2), each circumferential portion (26) of one of the pendular masses (5) of the pendular body (3) extending circumferentially beyond the other pendular mass (5) of this pendular body (3) comprising an opening (32) in which the retaining member (30) can move. CLAIMS

7. Device according to claim 6, each retaining member (30) being fixed on the support.

8. Device according to claim 6, each retaining member (30) being mounted movably on the support (2) with interposition of an elastic return member (31) exerting a radial force.

9. Device according to claim 5, each circumferential portion (26) of one of the pendular masses (5) of the pendular body (3) extending circumferentially beyond the other pendular mass (5) of this pendular body (3) fixedly carrying a retaining member (30), the latter being able to move in an opening (40) provided in the support (2).

10. Device according to any one of claims 5 to 9, comprising a plurality of pendular bodies (3), notably three pendular bodies, succeeding one another circumferentially around the rotation axis (X) of the support (2), each circumferential portion (26) of a mass (5) of a pendular body (3) extending circumferentially beyond the other pendular mass (5) of this pendular body (3) presenting a zone (27) circumferentially overlapping a pendular mass (5) of a circumferentially adjacent pendular body (3).

11. Device according to claim 10, each retaining member (30) cooperating with two pendular masses (5) belonging respectively to circumferentially adjacent pendular bodies, or each retaining member (30) cooperating with only one pendular body (3).

12. Device according to any one of the preceding claims, the support (2) comprising at least one tab (19), notably two diametrically opposed tabs (19), this tab (19) being able to cooperate with elastic return members for filtering torsional oscillations.

13. Component for a transmission system of a motor vehicle, the component being notably a dual mass flywheel, a hydrodynamic torque converter, a flywheel integral with the crankshaft, a dry or wet dual clutch, a wet single clutch, a hybrid powertrain component, or a friction disc, comprising a pendular damping device (1) according to any one of the preceding claims.

14. Component according to claim 13, being a dual mass flywheel, and comprising:
- the pendular damping device (1) according to claim 12, and
- a plurality of elastic return members, the tab (19) interacting with two elastic return members.
